# EUROPÄISCHE PATENTSCHRIFT

(11) **EP 3 005 510 B1**
(45) Veröffentlichungstag und Bekanntmachung des Hinweises auf die Patenterteilung: **20.11.2019**
(21) Anmeldenummer: 14715005.6
(22) Anmeldetag: 03.04.2014
(51) Int. Cl.: H02H 9/04, H04L 25/08, H04L 12/40, B60R 16/06

(54) **BUSSYSTEM ZUR AUSBILDUNG VON KOMMUNIKATIONSSCHNITTSTELLEN IM FAHRZEUG UND VERFAHREN ZUM HERSTELLEN EINES SOLCHEN BUSSYSTEMS**
BUS SYSTEM FOR FORMING COMMUNICATION INTERFACES IN A VEHICLE, AND A METHOD FOR PRODUCING SUCH A BUS SYSTEM
SYSTÈME DE BUS SERVANT À CRÉER DES INTERFACES DE COMMUNICATION À BORD D'UN VÉHICULE ET PROCÉDÉ DE FABRICATION D'UN TEL SYSTÈME DE BUS

(30) Priorität: 05.06.2013 DE 102013210420
(43) Veröffentlichungstag der Anmeldung: 13.04.2016
(73) Patentinhaber: Robert Bosch GmbH, 70442 Stuttgart (DE)
(72) Erfinder: WALKER, Steffen, 72770 Reutlingen (DE)
(86) Internationale Anmeldenummer: PCT/EP2014/056640
(87) Internationale Veröffentlichungsnummer: WO 2014/195043

(56) Entgegenhaltungen:
- EP-A1- 0 034 288
- WO-A1-2004/042950
- DE-A1- 19 509 133
- US-A- 4 878 145
- US-A- 5 841 620

## Beschreibung

Die vorliegende Erfindung betrifft ein Bussystem zur Ausbildung von Kommunikationsschnittstellen in einem Fahrzeug mit mindestens zwei unterschiedlichen Busleitungen, wobei die zwei Busleitungen jeweils mit einem und demselben ersten Spannungsbegrenzungsmittel zum Begrenzen des Spannungsbetrages eines zwischen einer jeden der zwei Busleitungen und einem ersten Punkt mit einem vordefinierten Bezugspotenzial positiv anfallenden Spannungspulses auf eine erste Spannungsgrenze elektrisch gekoppelt sind. Auch betrifft die Erfindung ein Verfahren zum Herstellen eines solchen Bussystems. Ferner betrifft die Erfindung ein Fahrzeug mit einem solchen Bussystem.

### Stand der Technik

Bei der Ausbildung von Kommunikationsschnittstellen in Fahrzeugen werden Bussysteme beziehungsweise Feldbussysteme, wie beispielsweise CAN- oder LIN-Bussysteme, eingesetzt. An solche Bussysteme und an deren Anschlüsse werden hohe Anforderungen bezüglich elektrostatischer Entladung (ESD) (Englisch: "electrostatic discharge") und elektromagnetischer Verträglichkeit (EMV) gestellt. Außerdem müssen die in einem solchen Bussystem vorkommenden Leitungen auch das Auftreten von Spannungen, die weit unter der Fahrzeugmasse liegen und typischerweise bis zu -27 V betragen können, erlauben.

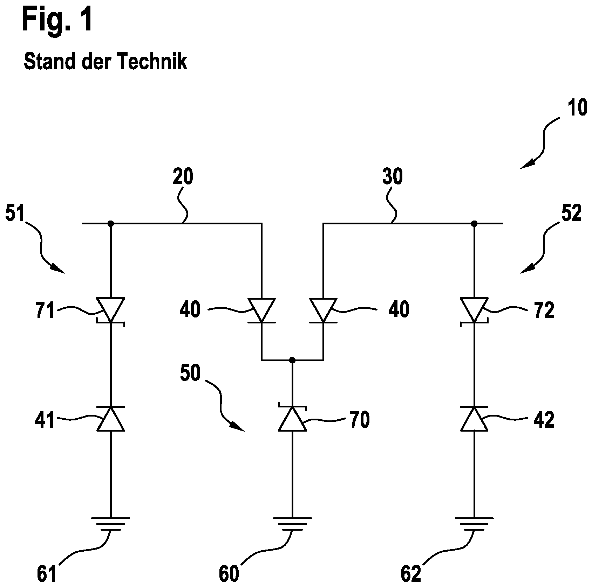

Aus dem Stand der Technik ist es bekannt, zur Ausbildung von Kommunikationsschnittstellen im Fahrzeug CAN-Bussysteme einzusetzen, die die in der Figur 1 dargestellte elektrostatische Entladeschutzstruktur aufweisen.

Das in der Figur 1 dargestellte zweiadrige CAN-Bussystem 10 umfasst eine erste Busleitung beziehungsweise CAN_H Leitung 20 und eine zweite Busleitung beziehungsweise CAN_L Leitung 30. Die beiden Busleitungen 20, 30 werden jeweils über eine Koppeldiode 40, die an ihrer Anode direkt mit der entsprechenden Busleitung 20, 30 verbunden ist, auf ein und denselben elektrostatischen Entladeschutz 50 für positive Spannungspulse geführt. Die Koppeldioden 40 sind jeweils als Koppeldioden mit nicht isoliertem Drain ausgebildet. Unter einer Diode mit Drain ist dabei stets ein als Diode geschalteter Transistor mit einem entsprechenden Drain-Bereich zu verstehen.

Der elektrostatische Entladeschutz 50 für positive Spannungspulse umfasst ein erstes Spannungsbegrenzungsmittel zum Begrenzen des Spannungsbetrages eines zwischen einer jeden der zwei Busleitungen 20, 30 und einer Masse 60 positiv anfallenden Spannungspulses. Das erste Spannungsbegrenzungsmittel umfasst eine Suppressordiode (positive Klammer) 70, die an ihrer Kathode direkt mit den Kathoden der zwei Koppeldioden 40 verbunden ist und an ihrer Anode direkt mit der Masse 60 verbunden ist. Die Suppressordiode 70 wird leitend, wenn ein zwischen einer jeden der zwei Busleitungen 20, 30 und der Masse 60 positiv anfallender Spannungspuls einen Spannungsbetrag aufweist, der den Spannungsbetrag der Durchbruchspannung der Suppressordiode 70 überschreitet. Der von einem solchen positiven Spannungspuls erzeugte Strom wird dann von der Suppressordiode 70 gefahrlos zur Masse 60 geleitet. Dadurch kann sich keine positiv anfallende, zerstörerische Spannung aufbauen.

Die Busleitungen 20, 30 werden auf einen jeweils anderen elektrostatischen Entladeschutz 51, 52 für negative Spannungspulse geführt. Der elektrostatische Entladeschutz 51, 52 für negative Spannungspulse ist dabei doppelt aufgebaut, das heißt, dass ein elektrostatischer Entladeschutz 51, 52 extra für jede der Busleitungen 20, 30 vorhanden ist.

Jeder elektrostatische Entladeschutz 51, 52 für negative Spannungspulse umfasst jeweils ein zweites Spannungsbegrenzungsmittel zum Begrenzen des Spannungsbetrages eines zwischen einer der entsprechenden Busleitung 20, 30 und einer entsprechenden Masse 61, 62 negativ anfallenden Spannungspulses. In diesem Fall umfassen die zweiten Spannungsbegrenzungsmittel jeweils eine Suppressordiode (negative Klammer) 71, 72, die an ihren Anoden jeweils direkt mit der entsprechenden Busleitung 20, 30 verbunden sind. Jede der zwei Suppressordioden 71, 72 ist an ihrer Kathode direkt mit der Kathode einer entsprechenden Verpoldiode 41, 42 verbunden. Jede der Verpoldioden 41, 42 ist an ihrer Anode dann direkt mit einer entsprechenden Masse 61, 62 verbunden.

Jede der zwei Suppressordioden 71, 72 wird leitend, wenn ein zwischen der entsprechenden Busleitung 20, 30 und der entsprechenden Masse 61, 62 negativ anfallender Spannungspuls einen Spannungsbetrag aufweist, der den Spannungsbetrag der Durchbruchspannung der entsprechenden Suppressordiode 71, 72 überschreitet. Der von einem solchen negativen Spannungspuls erzeugte Strom wird dann von der entsprechenden Suppressordiode 71, 72 gefahrlos zur entsprechenden Masse 61, 62 geleitet. Dadurch kann sich keine zerstörerische, negativ anfallende Spannung aufbauen.

Der elektrostatische Entladeschutz 51, 52 für negative Spannungspulse kann nicht wie der elektrostatische Entladeschutz 50 für positive Spannungspulse ausgebildet werden. Der Grund dafür ist, dass die Kathoden von solchen Koppeldioden 40, die mit nicht isoliertem Drain ausgebildet sind, nicht direkt an die Busleitungen 20, 30 gehängt werden können, weil sie das Auftreten von negativen Spannungspulsen, die weit unter der Fahrzeugmasse liegen und bis zu -27 V betragen können, nicht erlauben. Aus diesem Grund muss der elektrostatische Entladeschutz 51, 52 für negative Spannungspulse mittels der, wie vorhin beschrieben, elektrisch gekoppelten Verpoldioden 41, 42 doppelt aufgebaut werden.

Nachteilig ist dabei der hohe Flächenverbrauch, da die ESD-Schutzstruktur für negative Spannungspulse zweimal vorhanden ist. Dabei muss eine relativ große ESD-Schutzstruktur verwendet werden, da bei dem 8 kV-Gun Modell Ströme bis zu 32 A fließen können. Außerdem führt der zweifache Aufbau der elektrostatischen Entladeschutzstruktur für negative Spannungspulse zu Gleichrichteffekten bei der Durchführung von EMV- beziehungsweise DPI ("direct-power-injection") -Messungen. Eine Folge davon ist häufig, dass derartig aufgebaute Bausteine die für die Erstausrüster (OEM)-Forderungen notwendige Zertifizierung nicht bestehen.

Die US 4,878,145 offenbart eine Überspannungsschutzbeschaltung für die Datenleitungen eines Computers oder eines anderen Datenverarbeitungsequipments, welche ein Bussystem mit drei Busleitungen, genauer einer positiven Busleitung, einer negativen Busleitung und einer mit dem Massepotenzial verbundenen Referenzbusleitung aufweist.

Die US 5,841,620 offenbart eine Entladeschutzschaltung für Telekommunikationsequipment, bei welcher Busleitungen über mehrere Diodenbrückenschaltungen, welche jeweils drei Dioden aufweisen, mit Suppressordioden verbunden sind, um die Busleitungen vor Überspannungen zu schützen.

Die EP 0 034 288 A1 offenbart eine Schaltungsanordnung zum Abfangen überhöhter Spannungen in Adern elektronischer Anlagen, insbesondere in Nebenstellen-Vermittlungsanlagen, bei welchen Gasentladungsröhren kombiniert mit zu diesen parallel geschalteten Zenerdioden zum Einsatz kommen.

Die DE 195 09 133 A1 beschreibt eine Anordnung zur Überwachung eines Zweidraht-Bussystems, insbesondere eines CAN-Bussystems in einem Fahrzeug, welche drei gleichzeitig betriebene Empfangskomperatoren für einen Zweidraht- und zwei Eindraht-Betriebszustände aufweisen, wobei die Ausgangssignale der Komparatoren in einer Logikschaltung zu einem Störungszustandssignal verknüpft werden.

### Offenbarung der Erfindung

Erfindungsgemäß wird ein Bussystem, insbesondere ein Feldbussystem, zur Ausbildung von Kommunikationsschnittstellen in einem Fahrzeug mit mindestens zwei unterschiedlichen Busleitungen bereitgestellt. Dabei sind die zwei Busleitungen jeweils mit einem und demselben ersten Spannungsbegrenzungsmittel zum Begrenzen des Spannungsbetrages eines zwischen einer jeden der zwei Busleitungen und einem ersten Punkt mit einem vordefinierten Bezugspotenzial positiv anfallenden Spannungspulses auf eine erste Spannungsgrenze elektrisch gekoppelt. Ferner sind die zwei Busleitungen jeweils mit einem und demselben zweiten Spannungsbegrenzungsmittel zum Begrenzen des Spannungsbetrages eines zwischen einer jeden der zwei Busleitungen und einem zweiten Punkt mit dem vordefinierten Bezugspotenzial negativ anfallenden Spannungspulses auf eine zweite Spannungsgrenze elektrisch gekoppelt. Erfindungsgemäß sind die zwei Busleitungen ferner jeweils mittels einer Koppeldiode, die an ihrer Kathode direkt mit der entsprechenden Busleitung verbunden ist, mit dem zweiten Spannungsbegrenzungsmittel elektrisch gekoppelt, wobei jede Koppeldiode ein als Diode geschalteter Transistor mit isoliertem Drain ist.

Erfindungsgemäß wird ferner ein Verfahren zum Herstellen eines Bussystems zur Ausbildung von Kommunikationsschnittstellen in einem Fahrzeug bereitgestellt. Bei dem erfindungsgemäßen Verfahren werden mindestens zwei unterschiedliche Busleitungen vorgesehen, die jeweils mit einem und demselben ersten Spannungsbegrenzungsmittel zum Begrenzen des Spannungsbetrages eines zwischen einer jeden der zwei Busleitungen und einem ersten Punkt mit einem vordefinierten Bezugspotenzial positiv anfallenden Spannungspulses auf eine erste Spannungsgrenze elektrisch gekoppelt werden. Ferner werden die zwei Busleitungen jeweils mit einem und demselben zweiten Spannungsbegrenzungsmittel zum Begrenzen des Spannungsbetrages eines zwischen einer jeden der zwei Busleitungen und einem zweiten Punkt mit dem vordefinierten Bezugspotenzial negativ anfallenden Spannungspulses auf eine zweite Spannungsgrenze elektrisch gekoppelt. Die beiden Busleitungen werden jeweils über eine Koppeldiode, die an ihrer Kathode direkt mit der entsprechenden Busleitung verbunden ist, mit ein und demselben zweiten Spannungsbegrenzungsmittel elektrisch gekoppelt. Die Koppeldioden sind jeweils als als Diode geschalteter Transistor mit isoliertem Drain ausgebildet.

Somit werden die zwei Busleitungen des erfindungsgemäßen Bussystems auf ein und denselben elektrostatischen Entladeschutz für positive Spannungspulse und auf ein und denselben elektrostatischen Entladeschutz für negative Spannungspulse geführt. Dabei umfassen der elektrostatische Entladeschutz für positive Spannungspulse das erste Spannungsbegrenzungsmittel und der elektrostatische Entladeschutz für negative Spannungspulse das zweite Spannungsbegrenzungsmittel.

Vorteilhaft bei der vorliegenden Erfindung ist insbesondere, dass die elektrostatische Entladeschutzstruktur für ein in einem Fahrzeug einsetzbaren Bussystem stark vereinfacht wird. Die elektrostatische Entladeschutzstruktur für negative Spannungspulse weist dabei einen einfachen Aufbau auf. Dabei entfällt der doppelte Aufbau der aus dem Stand der Technik bekannten elektrostatische Entladeschutzstruktur für negative Spannungspulse. Somit weist die erfindungsgemäße elektrostatische Entladeschutzstruktur einen symmetrischen Aufbau auf. Durch die Verwendung einer solchen vereinfachten elektrostatischen Entladeschutzstruktur kann viel Siliziumfläche eingespart werden. Von höherer Bedeutung ist allerdings die höhere Robustheit einer symmetrisch aufgebauten ESD-Schutzstruktur bei der Durchführung von EMV- beziehungsweise DPI-Messungen. Auch treten bei einer solchen symmetrisch aufgebauten elektrostatischen Entladeschutzstruktur bei der Durchführung von EMV- beziehungsweise DPI-Messungen keine Gleichrichteffekte auf.

Bei einer bevorzugten Ausführungsform der Erfindung sind die zwei Busleitungen jeweils mittels einer Koppeldiode, die an ihrer Anode direkt mit der entsprechenden Busleitung verbunden ist, mit dem ersten Spannungsbegrenzungsmittel elektrisch gekoppelt. Dabei ist eine solche Koppeldiode bevorzugt eine Diode mit isoliertem Drain. Auch kann eine solche Koppeldiode einen nicht isolierten Drain aufweisen.
Bei dem erfindungsgemäßen Bussystem beträgt die zweite Spannungsgrenze bevorzugt 27 V.

Das bedeutet, dass die in einem solchen erfindungsgemäßen Bussystem mit symmetrischer elektrostatischer Entladeschutzstruktur vorkommenden Leitungen auch das Auftreten von Spannungen erlauben, die weit unter der Fahrzeugmasse liegen und bis zu -27 V betragen können.

Bei dem Aufbau der erfindungsgemäßen elektrostatischen Entladeschutzstruktur für positive Spannungspulse werden, wie vorhin erwähnt, beide Busleitungen jeweils über eine Koppeldiode mit nicht-isoliertem Drain oder jeweils über eine Koppeldiode mit isoliertem Drain an ein und denselben elektrostatischen Entladeschutz für positive Spannungspulse geführt werden.

Bei dem Aufbau der erfindungsgemäßen elektrostatischen Entladeschutzstruktur für negative Spannungspulse werden, wie vorhin erwähnt, Koppeldioden mit isoliertem Drain verwendet. Solche Koppeldioden mit isoliertem Drain gibt es in der neuen Halbleiterprozessgeneration BCD9s. Vorteilhaft dabei ist, dass die Kathoden solcher Koppeldioden mit isoliertem Drain direkt an die Busleitungen gehängt werden können. Solche Koppeldioden mit isoliertem Drain erlauben auch das Auftreten von weit unter der Fahrzeugmasse liegenden negativen Spannungen. So werden beide Busleitungen jeweils über eine solche Koppeldiode mit isoliertem Drain an ein und denselben elektrostatischen Entladeschutz für negative Spannungspulse geführt. Bei der erfindungsgemäßen elektrostatischen Entladeschutzstruktur für negative Spannungspulse entfällt somit der doppelte Aufbau, der bei der aus dem Stand der Technik bekannten elektrostatischen Entladeschutzstruktur für negative Spanungspulse vorkommt.

Bei einer bevorzugten Ausführungsform der Erfindung umfasst das erste Spannungsbegrenzungsmittel eine Suppressordiode, die mit ihrer Anode direkt mit dem ersten Punkt mit dem vordefinierten Potenzial verbunden ist. Vorzugsweise umfasst das zweite Spannungsbegrenzungsmittel eine weitere Suppressordiode, die mit ihrer Kathode direkt mit dem zweiten Punkt mit dem vordefinierten Potenzial verbunden ist.

Bei einer weiteren bevorzugten Ausführungsform der Erfindung ist die Kathode der Suppressordiode des ersten Spannungsbegrenzungsmittels jeweils direkt mit den Kathoden der entsprechenden Koppeldioden verbunden. Vorzugsweise ist die Anode der Suppressordiode des zweiten Spannungsbegrenzungsmittels jeweils direkt mit den Anoden der entsprechenden Koppeldioden mit isoliertem Drain verbunden.

Dabei sind der erste und der zweite Punkt mit vordefiniertem Bezugspotenzial bevorzugt jeweils auf Masse gebracht.

Bei dem erfindungsgemäßen Bussystem können die Spannungsbegrenzungsmittel jeweils durch die Verwendung einer elektrisch geeignet gekoppelten Suppressordiode in einer sehr einfachen Weise realisiert werden. Die zwei verwendeten Suppressordioden werden jeweils leitend, wenn ein zwischen einer jeden der zwei Busleitungen und der entsprechenden Masse positiv beziehungsweise negativ anfallender Spannungspuls einen Spannungsbetrag aufweist, der den Spannungsbetrag der Durchbruchspannung der entsprechenden Suppressordiode überschreitet. Der von einem solchen positiven beziehungsweise negativen Spannungspuls erzeugte Strom wird dann von der entsprechenden Suppressordiode gefahrlos zu der entsprechenden Masse geleitet. Dadurch kann sich keine zerstörerische Spannung aufbauen.

Bei einer weiteren bevorzugten Ausführungsform der Erfindung ist das eingesetzte Bussystem ein CAN-Bussystem, genauer gesagt ein zweiadriges CAN-Bussystem. Dabei ist eine der zwei Busleitungen eine CAN_H Leitung und die andere der zwei Busleitungen eine CAN_L Leitung.

Die Erfindung ist besonders vorteilhaft anwendbar bei einem CAN-FD Bus, das heißt einem CAN-Bussystem mit flexibler Datenrate. Jedoch ist die Erfindung ebenso gut bei einem CAN-HS-Bus, das heißt einem Hochgeschwindigkeits-CAN-Bussystem mit hoher Datenübertragungsrate von beispielsweise maximal 1 Mbit/s, oder einem Niedriggeschwindigkeits-CAN-Bussystem mit einer niedrigeren Datenübertragungsrate von beispielsweise 125 Kbit/s anzuwenden.

Nach noch einer anderen Ausführungsform ist das eingesetzte Bussystem ein FlexRay-Bussystem oder ein anderes geeignetes, zweiadriges Bussystem.

Ein weiterer Aspekt der Erfindung betrifft ein Fahrzeug mit einem erfindungsgemäßen Bussystem.

Vorzugsweise sind bei dem erfindungsgemäßen Fahrzeug der erste Punkt mit dem vordefinierten Bezugspotenzial und der zweite Punkt mit dem vordefinierten Bezugspotenzial jeweils auf die Fahrzeugmasse gebracht.

Vorteilhafte Weiterbildungen der Erfindung sind in den Unteransprüchen angegeben und in der Beschreibung beschrieben.

### Zeichnungen

Ausführungsbeispiele der Erfindung werden anhand der Zeichnungen und der nachfolgenden Beschreibung näher erläutert. Es zeigen:
Figur 1 ein aus dem Stand der Technik bekanntes Bussystem zur Ausbildung von Kommunikationsschnittstellen im Fahrzeug und,
Figur 2 ein gemäß einer ersten Ausführungsform der Erfindung ausgebildetes Bussystem zur Ausbildung von Kommunikationsschnittstellen im Fahrzeug.

### Ausführungsformen der Erfindung.

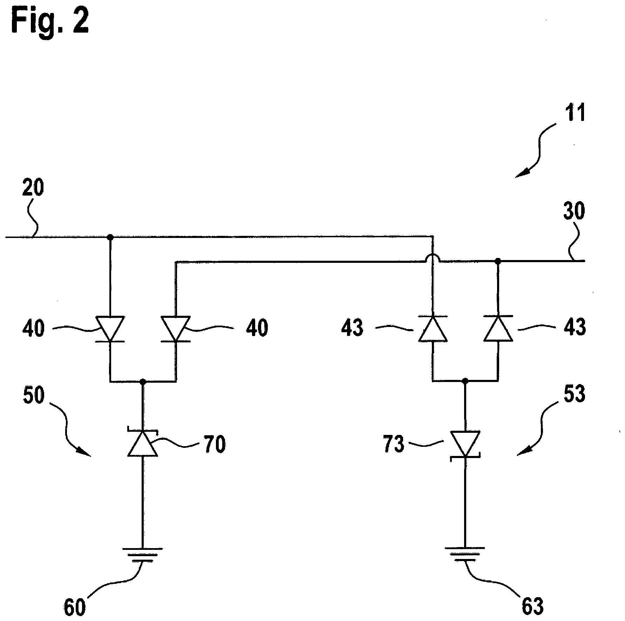

In der Figur 2 ist ein gemäß einer ersten Ausführungsform der Erfindung ausgebildetes Bussystem 11 zur Ausbildung von Kommunikationsschnittstellen im Fahrzeug dargestellt. Das in der Figur 2 dargestellte CAN-Bussystem 11 umfasst eine erste Busleitung beziehungsweise CAN_H Leitung 20 und eine zweite Busleitung beziehungsweise CAN_L Leitung 30.

Das CAN-Bussystem 11 ist gemäß dieser Ausführungsform als ein CAN-FD-Bussystem mit flexibler Datenrate ausgeprägt. Jedoch ist die Erfindung nicht auf eine solche Ausführungsform beschränkt, sondern auch bei anderen geeigneten Bussystemen anwendbar.

Die beiden Busleitungen 20, 30 werden jeweils über eine Koppeldiode 40, die an ihrer Anode direkt mit der entsprechenden Busleitung 20, 30 verbunden ist, auf ein und denselben elektrostatischen Entladeschutz 50 für positive Spannungspulse geführt. Die Koppeldioden 40 können jeweils als Koppeldioden mit nicht isoliertem Drain ausgebildet sein. Auch können die Koppeldioden 40 jeweils als Koppeldioden mit isoliertem Drain ausgebildet sein.

Der elektrostatische Entladeschutz 50 für positive Spannungspulse umfasst ein erstes Spannungsbegrenzungsmittel zum Begrenzen des Spannungsbetrages eines zwischen einer jeden der zwei Busleitungen 20, 30 und einer Masse 60 positiv anfallenden Spannungspulses. Das erste Spannungsbegrenzungsmittel umfasst eine Suppressordiode (positive Klammer) 70, die an ihrer Kathode direkt mit den Kathoden der zwei Koppeldioden 40 verbunden ist und an ihrer Anode direkt mit der Masse 60 verbunden ist. Die Suppressordiode 70 wird leitend, wenn ein zwischen einer jeden der zwei Busleitungen 20, 30 und der Masse 60 positiv anfallender Spannungspuls einen Spannungsbetrag aufweist, der den Spannungsbetrag der Durchbruchspannung der Suppressordiode 70 überschreitet. Der von einem solchen positiven Spannungspuls erzeugte Strom wird dann von der Suppressordiode 70 gefahrlos zur Masse 60 geleitet. Dadurch kann sich keine zerstörerische positiv anfallende Spannung aufbauen.

Die beiden Busleitungen 20, 30 werden jeweils über eine Koppeldiode 43, die an ihrer Kathode direkt mit der entsprechenden Busleitung 20, 30 verbunden ist, auf ein und demselben elektrostatischen Entladeschutz 53 für negative Spannungspulse geführt. Die Koppeldioden 43 sind jeweils als Koppeldioden mit isoliertem Drain ausgebildet. Der Grund dafür ist, dass die Kathoden von solchen Koppeldioden 43, die als Koppeldioden mit isoliertem Drain ausgebildet sind, direkt an die Busleitungen 20, 30 gehängt werden können, weil sie das Auftreten von negativen Spannungen, die weit unter der Fahrzeugmasse liegen und bis zu -27 V betragen können, erlauben.

Der elektrostatische Entladeschutz 53 für negative Spannungspulse umfasst ein zweites Spannungsbegrenzungsmittel zum Begrenzen des Spannungsbetrages eines zwischen einer jeden der zwei Busleitungen 20, 30 und einer Masse 63 negativ anfallenden Spannungspulses. Das zweite Spannungsbegrenzungsmittel umfasst eine Suppressordiode (negative Klammer) 73, die an ihrer Anode direkt mit der Anode der zwei Koppeldioden 43 verbunden ist und an ihrer Kathode direkt mit der Masse 63 verbunden ist. Die Suppressordiode 73 wird leitend, wenn ein zwischen einer jeden der zwei Busleitungen 20, 30 und der Masse 63 negativ anfallender Spannungspuls einen Spannungsbetrag aufweist, der den Spannungsbetrag der Durchbruchspannung der Suppressordiode 73 überschreitet. Der von einem solchen negativen Spannungspuls erzeugte Strom wird dann von der Suppressordiode 73 gefahrlos zur Masse 63 geleitet. Dadurch kann sich keine zerstörerische, negativ anfallende Spannung aufbauen.

Die Busleitungen 20, 30 des Bussystems 11 nach der ersten Ausführungsform der Erfindung werden jeweils über geeignete Koppeldioden 40, 43 auf einen und demselben elektrostatischen Entladeschutz 50 für positive Spannungspulse und auf einen und demselben elektrostatischen Entladeschutz 53 für negative Spannungspulse geführt. Somit ist die ESD-Schutzstruktur des erfindungsgemäßen Bussystems 11 zur Ausbildung von Kommunikationsschnittstellen im Fahrzeug symmetrisch aufgebaut. Dabei entfällt der doppelte Aufbau der ESD-Schutzstruktur für negative Spannungspulse.

## Patentansprüche

1. Bussystem (11), insbesondere Feldbussystem, zur Ausbildung von Kommunikationsschnittstellen in einem Fahrzeug mit mindestens zwei unterschiedlichen Busleitungen (20, 30), wobei die zwei Busleitungen (20, 30) jeweils mit einem und demselben ersten Spannungsbegrenzungsmittel zum Begrenzen des Spannungsbetrages eines zwischen einer jeden der zwei Busleitungen (20, 30) und einem ersten Punkt (60) mit einem vordefinierten Bezugspotenzial positiv anfallenden Spannungspulses auf eine erste Spannungsgrenze elektrisch gekoppelt sind, wobei die zwei Busleitungen (20, 30) ferner jeweils mit einem und demselben zweiten Spannungsbegrenzungsmittel zum Begrenzen des Spannungsbetrages eines zwischen einer jeden der zwei Busleitungen (20, 30) und einem zweiten Punkt (63) mit dem vordefinierten Bezugspotenzial negativ anfallenden Spannungspulses auf eine zweite Spannungsgrenze elektrisch gekoppelt sind, wobei die zwei Busleitungen (20, 30) jeweils mittels einer Koppeldiode (43), die an ihrer Kathode direkt mit der entsprechenden Busleitung (20, 30) verbunden ist, mit dem zweiten Spannungsbegrenzungsmittel elektrisch gekoppelt sind, **dadurch gekennzeichnet, dass** jede Koppeldiode (43) ein als Diode geschalteter Transistor mit isoliertem Drain ist.

2. Bussystem (11) nach Anspruch 1, wobei die zwei Busleitungen (20, 30) jeweils mittels einer Koppeldiode (40), die an ihrer Anode direkt mit der entsprechenden Busleitung (20, 30) verbunden ist, mit dem ersten Spannungsbegrenzungsmittel elektrisch gekoppelt sind.

3. Bussystem (11) nach einem der Ansprüche 1 oder 2, wobei das erste Spannungsbegrenzungsmittel eine Suppressordiode (70) umfasst, die mit ihrer Anode direkt mit dem ersten Punkt (60) mit dem vordefinierten Potenzial verbunden ist und/oder das zweite Spannungsbegrenzungsmittel eine weitere Suppressordiode (73) umfasst, die mit ihrer Kathode direkt mit dem zweiten Punkt (63) mit dem vordefinierten Potenzial verbunden ist.

4. Bussystem (11) nach Anspruch 3, wobei die Kathode der Suppressordiode (70) des ersten Spannungsbegrenzungsmittels jeweils direkt mit den Kathoden der entsprechenden Koppeldioden (40) verbunden ist und/oder die Anode der Suppressordiode (73) des zweiten Spannungsbegrenzungsmittels jeweils direkt mit den Anoden der entsprechenden Koppeldioden (43) mit isoliertem Drain verbunden ist.

5. Bussystem (11) nach einem der vorangehenden Ansprüche, wobei das Bussystem (11) ein CAN-Bussystem, bevorzugt ein CAN-FD-Bussystem, oder ein FlexRay-Bussystem ist.

6. Verfahren zum Herstellen eines Bussystems (11) zur Ausbildung von Kommunikationsschnittstellen in einem Fahrzeug, bei dem mindestens zwei unterschiedliche Busleitungen (20, 30) jeweils mit einem und demselben ersten Spannungsbegrenzungsmittel elektrisch gekoppelt werden zum Begrenzen des Spannungsbetrages eines zwischen einer jeden der zwei Busleitungen (20, 30) und einem ersten Punkt (60) mit einem vordefinierten Bezugspotenzial positiv anfallenden Spannungspulses auf eine erste Spannungsgrenze, wobei die zwei Busleitungen ferner jeweils mit einem und demselben zweiten Spannungsbegrenzungsmittel zum Begrenzen des Spannungsbetrages eines zwischen einer jeden der zwei Busleitungen (20, 30) und einem zweiten Punkt (63) mit dem vordefinierten Bezugspotenzial negativ anfallenden Spannungspulses auf eine zweite Spannungsgrenze elektrisch gekoppelt werden, wobei die beiden Busleitungen (20, 30) jeweils über eine Koppeldiode (43), die an ihrer Kathode direkt mit der entsprechenden Busleitung (20, 30) verbunden ist, mit ein und demselben zweiten Spannungsbegrenzungsmittel elektrisch gekoppelt werden, **dadurch gekennzeichnet, dass** die Koppeldioden (43) jeweils als als Diode geschalteter Transistor mit isoliertem Drain ausgebildet sind.

7. Kraftfahrzeug mit einem Bussystem (11) nach einem der Ansprüche 1 bis 5.

8. Kraftfahrzeug nach Anspruch 7, wobei der erste Punkt (60) mit dem vordefinierten Bezugspotenzial und der zweite Punkt (63) mit dem vordefinierten Bezugspotenzial jeweils an die Fahrzeugmasse angeschlossen sind.

## Claims

1. Bus system (11), in particular field bus system, for forming communication interfaces in a vehicle, having at least two different bus lines (20, 30), wherein the two bus lines (20, 30) are each electrically coupled to the same first voltage limitation means for limiting the absolute voltage value of a positive voltage pulse between each of the two bus lines (20, 30) and a first point (60) having a predefined reference potential to a first voltage limit, wherein the two bus lines (20, 30) are also each electrically coupled to the same second voltage limitation means for limiting the absolute voltage value of a negative voltage pulse between each of the two bus lines (20, 30) and a second point (63) having the predefined reference potential to a second voltage limit,
wherein the two bus lines (20, 30) are each electrically coupled to the second voltage limitation means by means of a coupling diode (43) which is directly connected to the corresponding bus line (20, 30) at its cathode, **characterized in that** each coupling diode (43) is a transistor with an insulated drain which is connected as a diode.

2. Bus system (11) according to Claim 1, wherein the two bus lines (20, 30) are each electrically coupled to the first voltage limitation means by means of a coupling diode (40) which is directly connected to the corresponding bus line (20, 30) at its anode.

3. Bus system (11) according to either of Claims 1 and 2, wherein the first voltage limitation means comprises a suppressor diode (70), the anode of which is directly connected to the first point (60) having the predefined potential, and/or the second voltage limitation means comprises a further suppressor diode (73), the cathode of which is directly connected to the second point (63) having the predefined potential.

4. Bus system (11) according to Claim 3, wherein the cathode of the suppressor diode (70) of the first voltage limitation means is respectively directly connected to the cathodes of the corresponding coupling diodes (40), and/or the anode of the suppressor diode (73) of the second voltage limitation means is respectively directly connected to the anodes of the corresponding coupling diodes (43) with an insulated drain.

5. Bus system (11) according to one of the preceding claims, wherein the bus system (11) is a CAN bus system, preferably a CAN-FD bus system, or a FlexRay bus system.

6. Method for producing a bus system (11) for forming communication interfaces in a vehicle, in which at least two different bus lines (20, 30) are each electrically coupled to the same first voltage limitation means for limiting the absolute voltage value of a positive voltage pulse between each of the two bus lines (20, 30) and a first point (60) having a predefined reference potential to a first voltage limit, wherein the two bus lines are also each electrically coupled to the same second voltage limitation means for limiting the absolute voltage value of a negative voltage pulse between each of the two bus lines (20, 30) and a second point (63) having the predefined reference potential to a second voltage limit,
wherein the two bus lines (20, 30) are each electrically coupled to the same second voltage limitation means via a coupling diode (43) which is directly connected to the corresponding bus line (20, 30) at its cathode, **characterized in that** the coupling diodes (43) are each in the form of a transistor with an insulated drain which is connected as a diode.

7. Motor vehicle having a bus system (11) according to one of Claims 1 to 5.

8. Motor vehicle according to Claim 7, wherein the first point (60) having the predefined reference potential and the second point (63) having the predefined reference potential are each connected to the vehicle earth.

## Revendications

1. Système de bus (11), en particulier système de bus de terrain, servant à créer des interfaces de communication à bord d'un véhicule qui comprend au moins deux lignes de bus (20, 30) différentes, dans lequel les deux lignes de bus (20, 30) sont chacune reliées électriquement à un seul et même premier moyen limiteur de tension servant à limiter à une première limite de tension l'amplitude de tension d'une impulsion de tension positive se produisant entre chacune des deux lignes de bus (20, 30) et un premier point (60) ayant un potentiel de référence prédéfini, dans lequel les deux lignes de bus (20, 30) sont en outre chacune reliées électriquement à un seul et même second moyen limiteur de tension servant à limiter à une seconde limite de tension l'amplitude de tension d'une impulsion de tension négative se produisant entre chacune des deux lignes de bus (20, 30) et un second point (63) ayant le potentiel de référence prédéfini, dans lequel les deux lignes de bus (20, 30) sont chacune reliées électriquement au second moyen limiteur de tension au moyen d'une diode de couplage (43) qui est directement reliée par sa cathode à la ligne de bus (20, 30) correspondante,
**caractérisé en ce que** chaque diode de couplage (43) est un transistor à drain isolé connecté en tant que diode.

2. Système de bus (11) selon la revendication 1, dans lequel les deux lignes de bus (20, 30) sont chacune reliées électriquement au premier moyen limiteur de tension au moyen d'une diode de couplage (40) qui est directement reliée par son anode à la ligne de bus (20, 30) correspondante.

3. Système de bus (11) selon l'une des revendications 1 ou 2, dans lequel le premier moyen limiteur de tension comprend une diode de suppression (70) qui est directement reliée par son anode au premier point (60) ayant le potentiel prédéfini et/ou le second moyen limiteur de tension comprend une autre diode de suppression (73) qui est directement reliée par sa cathode au second point (63) ayant le potentiel prédéfini.

4. Système de bus (11) selon la revendication 3, dans lequel la cathode de la diode de suppression (70) du premier moyen limiteur de tension est respectivement directement reliée aux cathodes des diodes de couplage (40) correspondantes et/ou l'anode de la diode de suppression (73) du second moyen limiteur de tension est respectivement directement reliée aux anodes des diodes de couplage à drain isolé (43) correspondantes.

5. Système de bus (11) selon l'une des revendications précédentes, dans lequel le système de bus (11) est un système de bus CAN, de préférence un système de bus CAN-FD, ou un système de bus FlexRay.

6. Procédé de réalisation d'un système de bus (11) servant à créer des interfaces de communication à bord d'un véhicule, dans lequel au moins deux lignes de bus (20, 30) différentes sont chacune reliées électriquement à un seul et même premier moyen limiteur de tension afin de limiter à une première limite de tension l'amplitude de tension d'une impulsion de tension positive se produisant entre chacune des deux lignes de bus (20, 30) et un premier point (60) ayant un potentiel de référence prédéfini, dans lequel les deux lignes de bus sont en outre chacune reliées électriquement à un seul et même second moyen limiteur de tension servant à limiter à une seconde limite de tension l'amplitude de tension d'une impulsion de tension négative se produisant entre chacune des deux lignes de bus (20, 30) et un second point (63) ayant le potentiel de référence prédéfini, dans lequel les deux lignes de bus (20, 30) sont chacune reliées électriquement à un seul et même second moyen limiteur de tension au moyen d'une diode de couplage (43) qui est directement reliée par sa cathode à la ligne de bus (20, 30) correspondante, **caractérisé en ce que** les diodes de couplage (43) sont chacune réalisées sous la forme d'un transistor à drain isolé connecté en tant que diode.

7. Véhicule automobile comprenant un système de bus (11) selon l'une des revendications 1 à 5.

8. Véhicule automobile selon la revendication 7, dans lequel le premier point (60) ayant le potentiel de référence prédéfini et le second point (63) ayant le potentiel de référence prédéfini sont chacun reliés à la masse du véhicule.
